# NEW EUROPEAN PATENT SPECIFICATION

(11) **EP 2 201 748 B2**
(45) Date of publication and mention of the opposition decision: **03.06.2015**
(45) Mention of the grant of the patent: 25.05.2011
(21) Application number: 08716893.6
(22) Date of filing: 15.02.2008
(51) Int. Cl.: H04M 1/04, H01B 7/40, H04M 1/60

(54) **A HANDSFREE CABLE FOR USE WITH AN ELECTRONIC DEVICE**
FREISPRECHKABEL ZUR VERWENDUNG MIT EINEM ELEKTRONISCHEN GERÄT
CÂBLE MAINS LIBRES À UTILISER AVEC UN DISPOSITIF ÉLECTRONIQUE

(30) Priority: 17.10.2007 US 873573
(43) Date of publication of application: 30.06.2010
(73) Proprietor: Sony Mobile Communications AB, 221 88 Lund (SE)
(72) Inventor: AXELSSON, Per, S-232 52 Åkarp (SE)
(74) Representative: Zacco Sweden AB
(86) International application number: PCT/EP2008/051891
(87) International publication number: WO 2009/049922

(56) References cited:
- WO-A-01/33816
- WO-A-99/11044
- WO-A-2006/022470
- US-A1- 2006 089 171

## Description

### TECHNICAL FIELD

The present invention relates generally to the field of mobile communications and, more particularly, to accessories for the usage together with portable electronic devices such as mobile phones. More specifically, the present invention relates to handsfree cables for use with portable electronic devices such as mobile phones.

### BACKGROUND

Electronic devices such as mobile handsets, mobile phones, smart phones, Personal Digital Assistants (PDA's), media players, audio players, handheld computers and the like are widely used today. The first commercially attractive electronic devices such as mobile phones were introduced in the market in the end of the 1980's. Since then, the mobile communications industry has had an enormous development both regarding quality of service and transmission capabilities, as well as the technology for producing advanced communications terminals.

There exist various accessory items, commonly referred to as accessories, for the usage together with any of the above mentioned electronic devices. As a mere example, electronic devices such as mobile phones are known to be operable together with handsfree cables which may be plugged into the mobile phone to provide a handsfree talking facility. The handsfree cables may be portable, e.g. portable handsfree cables. Historically, handsfree cables for mobile phones were mainly limited to voice communication. However, due to the fact that mobile phones are now more and more taking the form of media terminals, recent handsfree cables have been developed to also be operable to provide music to the user through a earpiece speaker of the handsfree cable, etc.

WO 01/33816 discloses a cellular phone with a hands-free device, where the cellular phone further comprises means for fixation of a cable in wound state around the casing of the cellular phone.

JP 7006635 discloses a signal transmission cable for preventing external appearance from worsening due to bending or the like while improving usability without getting entangled.

Known state of the art handsfree cables may become tangled, especially when the handsfree cable is placed in a bag, pocket or purse. After storage of the handsfree cable in such bag/pocket/purse, the user may have to untangle the entangled handsfree cable before it can be used appropriately together with the electronic device. This may be time-consuming and annoying to users of such handsfree cables.

### SUMMARY OF THE INVENTION

The present invention is a handsfree cable according to claim 1 and use of a shape memory alloy according to claim 8.

Disclosed is a handsfree cable for use with an electronic device, the handsfree cable having an elongated body comprising an outer boundary layer which surrounds at least one wire, wherein the handsfree cable comprises a shape memory alloy which extends along at least part of said elongated body.

In one embodiment, the shape memory alloy is arranged inside the elongated body such that the shape memory alloy is surrounded by the outer boundary layer of the elongated body.

In one embodiment, the shape memory alloy is a Nickel-Titanium alloy. The shape memory alloy may be Nitinol ®.

In one embodiment, the shape memory alloy is a Copper-Zinc-Aluminum alloy.

In one embodiment, the shape memory alloy is a Copper-Aluminum-Nickel alloy.

In one embodiment, the shape memory alloy extends along the full length of said elongated body.

In one embodiment, the shape memory alloy is arranged on an outer surface of the outer boundary layer of the elongated body.

In one embodiment, the shape memory alloy comprises a shape memory alloy filament attached to said outer surface.

In one embodiment, the shape memory alloy comprises a tubular-shaped shape memory alloy attached to said outer surface such that said outer surface is surrounded by the tubular-shaped shape memory alloy.

In one embodiment, the tubular-shaped shape memory alloy has a mesh-like shape.

In one embodiment, the shape memory is attached to said outer surface by means of an adhesive.

In one embodiment, the shape memory alloy is a Nickel-Titanium alloy. The shape memory alloy may be Nitinol®.

In one embodiment, the shape memory alloy is a Copper-Zinc-Aluminum alloy.

In one embodiment, the shape memory alloy is a Copper-Aluminum-Nickel alloy.

In one embodiment, the shape memory alloy extends along the full length of said elongated body.

In one embodiment, the shape memory alloy has a composition such that it is in its super elastic state in a part of or in the entire temperature interval from about -20°C to about 60°C.

The different features of the above-mentioned handsfree cable can be combined in any combination.

Another aspect of the invention relates to a use of a shape memory alloy as a constituent part of a handsfree cable.

In one embodiment, the shape memory alloy is a Nickel-Titanium alloy. The shape memory alloy may be Nitinol®.

In one embodiment, the shape memory alloy is a Copper-Zinc-Aluminum alloy.

In one embodiment, the shape memory alloy is a Copper-Aluminum-Nickel alloy.

Some embodiments of the present invention provide for an improved handsfree cable, which reduces the risk of entanglement of the handsfree cable. It is an advantage with some embodiments of the invention that they allow for a handsfree cable, which reduces the risk of entanglement of the handsfree cable after the handsfree cable has been stored or placed in a limited space, e.g., within a bag, pocket or purse. In accordance with some embodiments of the invention, a tangle-free or substantially tangle-free handsfree cable can be provided. It is a further advantage with some embodiments that a relaxed (original) state of the handsfree cable can be provided with a customized shape.

### BRIEF DESCRIPTION OF THE DRAWINGS

Further objects, features and advantages of the present invention will appear from the following detailed description of the invention, wherein embodiments of the invention will be described in more detail with reference to the accompanying drawings, in which:
FIG. 1 is a perspective view of an exemplary handsfree cable ;
FIG. 2 is a cross-sectional view of the handsfree cable of FIG. 1;
FIG. 3 is a perspective view of an exemplary handsfree cable according to another embodiment of the present invention;
FIG. 4 is a cross-sectional view of the handsfree cable of FIG. 3 in accordance with an embodiment of the present invention;
FIG. 5 is a perspective view of a handsfree cable;
FIG. 6 is a cross-sectional view of the handsfree cable of FIG. 5;
FIG. 7 is a perspective view of a handsfree cable according to another embodiment of the present invention; and
FIG. 8 is a cross-sectional view of the handsfree cable of FIG. 7 in accordance with an embodiment of the present invention.
Fig. 9 is a cross-sectional view of a handsfree cable.

### DETAILED DESCRIPTION

Embodiments of the present invention will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference signs refer to like elements throughout.

Some embodiments of the present invention stem from the inventor's realization that a shape memory alloy, also known as smart alloy or memory metal, may be used as an integral part of a handsfree cable in order to reduce the risk of entanglement of said handsfree, e.g., if it were to be placed in a limited space such as in pocket, purse or pocket. The handsfree cable may be a portable handsfree cable. Shape memory alloys are metals, which exhibit a shape memory effect. Shape memory alloys may have different kinds of shape memory effects: one-way effect, two-way effect and/or super elasticity. With the one-way and the two-way effect there is a martensite transformation when there is a temperature change. The difference is that the martensite cannot generally be retrieved with the one-way effect. With super elasticity, the transformation is during loading and unloading. Shape memory alloys and their specific properties are known as such and will therefore not be described in any greater detail herein. Shape memory alloys which may be used in some embodiments of the present invention include, e.g., Nickel-Titanium alloys, Copper-Zinc-Aluminum alloys, Copper-Aluminum-Nickel alloys, etc. As a best mode known to date, it has turned out in experiments that a shape memory alloy wire or shape memory alloy filament currently available, such as that sold under the trade name Nitinol® (an acronym for Nickel Titanium Naval Ordnance Laboratories), may advantageously be used in connection with some embodiments of the present invention. This will be described in further detail hereinbelow.

A handsfree cable according to some embodiments of the invention embodiment may advantageously, but not necessarily, be intended for the usage together with a portable electronic device. The portable electronic device may be any portable electronic device such as, e.g., a mobile radio terminal, a mobile phone, a cellular phone, a communicator, a computer, a smart phone, a Personal Digital Assistant (PDA), an electronic organizer, an audio player such as an MP3-player or an iPod™, or a digital camera. Some embodiments of the invention will be explained in further detail in the following.

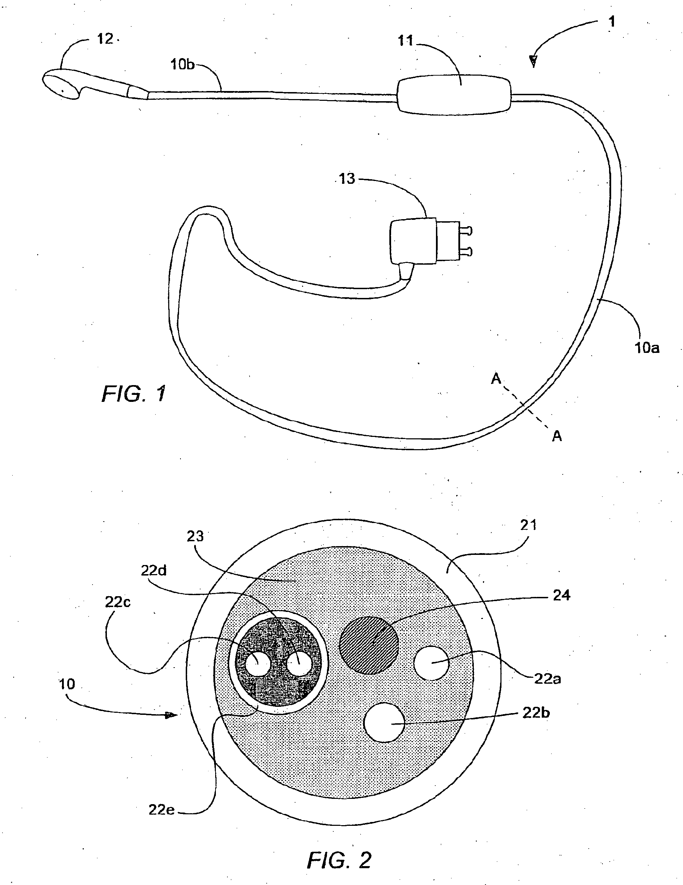

Figs. 1 and 2 illustrate two different views of a handsfree cable 1. The handsfree cable may be a portable handsfree. The handsfree cable 1 comprises an elongated body 10. If the handsfree cable is intended for use with a mobile phone, the elongated body 10 may comprise an in-line microphone portion 11. In one end of the handsfree cable 1, there may be provided an earpiece speaker 12. In the other opposite end, the handsfree cable 1 may be provided with a connector 13, e.g., for plugging into a jack of a mobile phone.

Fig. 2 is a cross-sectional view of the handsfree cable 1, for example, at A-A of Fig. 1. As can be seen in this figure, the elongated body 10 comprises an outer boundary layer 21 so as to surround one or several wires 22 inside the elongated body 10 of the handsfree cable 1. As is illustrated in Fig. 2, the interior 23 of the elongated body 10 of handsfree cable 1 may comprise one, two or even several conductor wires 22a, 22b, 22c, 22d, 22e. These conductor wires 22a, 22b, 22c, 22d, 22e may be utilized for electrical signals appropriate to propagate through the elongated body 10 of the handsfree cable 1 in dependence of the intended use of the handsfree cable 1. The outer boundary layer 21, which surrounds the conductor(s) 22a, 22b, 22c, 22d, 22e may be made of an insulating material to protectively cover the conductor(s) 22a, 22b, 22c, 22d, 22e. As is illustrated in Fig. 2, the elongated body 10 of the handsfree cable 1 additionally comprises a shape memory alloy filament 24 arranged within the interior 23 of the elongated body 10. Thus, the shape memory alloy filament 24 is arranged inside the elongated body 10 such that the shape memory alloy filament 24 is surrounded by outer boundary layer 21 of the elongated body 10. The shape memory alloy filament 24 extends along the elongated body 10. The shape memory alloy filament 24 may extend along the elongated body 10 only in different sections of the elongated body 10 such that the elongated body 10 only comprises the shape memory alloy filament 24 stepwise along the length of the elongated body 10. However, it is advantageous to arrange the shape memory alloy filament 24 so that it extends along the full or substantially the full length of said elongated body 10. In other words, it may be advantageous to arrange the shape memory alloy filament 24 so that it extends along the total length of elongated body 10a from the connector 13 to the microphone portion 11. Also, it may be advantageous to arrange the shape memory alloy filament 24 so that it extends along the full length of elongated body 10b from the microphone portion 11 to the earpiece speaker 12. The shape memory alloy filament 24 may be any shape memory alloy filament such as copper-zinc-aluminum-nickel, copper-aluminum-nickel, or nickel-titanium (Ni-Ti) alloys. Ni-Ti alloys possess superior mechanical properties when compared to copper-based shape memory alloys. However, Ni-Ti alloys are generally more expensive than copper-based shape memory alloys. Since a shape memory alloy filament 24 may be capable of adopting one shape below a predetermined transition temperature and changing to a second shape once its temperature exceeds the transition temperature, also the handsfree cable 1 comprising this shape memory alloy filament 24 inside the elongated body 10 of the handsfree cable 1 may exhibit these properties.

As a best mode of operation of this embodiment of the invention known to date, the shape memory alloy filament 24 should be of a Ni-Ti alloy filament, preferably a Nitinol® filament. Nitinol® is typically, but not necessarily, composed of approximately 55% Ni by weight. When it is deformed it will remain in that shape until heated above its transformation temperature, at which it will return to its original shape. Above its transformation temperature, Nitinol® is super elastic, able to withstand a relatively large amount of deformation when a load is applied and return to its original shape when the load is removed. Making small changes in the alloy composition can change the transition temperature significantly. For this reason, Nitinol® may or may not be super elastic at room temperature. Handsfree cables may be specified to be used in the temperature interval from about -20°C to about 60°C. Therefore, in some embodiments it may be advantageous to choose a composition of the shape memory alloy filament 24 such that the transition temperature is below -20°C, e.g. in the interval from about -30°C to -25°C. The shape memory alloy filament 24 may be super elastic in a part of or in the entire temperature interval from about -20°C to about 60°C. The exact choice of alloy composition of the shape memory alloy filament 24 may vary in dependence of the intended purpose or use of the handsfree cable 1. Thus, the exact choice of composition of the shape memory alloy filament 24 should be tested and evaluated in each specific case. Subsequently, it should finally be tailor-made in terms of e.g. mechanical and thermal properties in dependence of the specific intended use or purpose of the handsfree cable 1.

Arranging a shape memory alloy filament 24 such as a Nitinol® filament within the interior of the handsfree cable 1 provides for a handsfree cable 1, which allows the handsfree cable 1 to be winded, coiled or entangled relatively hard without permanent deformation. This is inter alia because the Nitinol® filament may be configured to be in its super elastic state in a part of or in the entire temperature interval from about -20°C to about 60°C, in which the handsfree cable 1 is intended to be used. When the stress or load is removed, the handsfree cable 1 will subsequently return to its relaxed state, thus changing the shape of the handsfree cable 1 to the original shape. The relaxed (original) state could be a straight shape, but other customized shapes could also be equally possible. In view of this, a handsfree cable 1 comprising a shape memory alloy filament 24, e.g. a Nitinol® filament, within its interior could potentially become entangled when placed in a bag, pocket or bag but it would nevertheless return to its relaxed (original) shape when it is removed from the bag, pocket or purse and so the risk of entanglement of the handsfree cable 1 is minimized and potentially even eliminated.

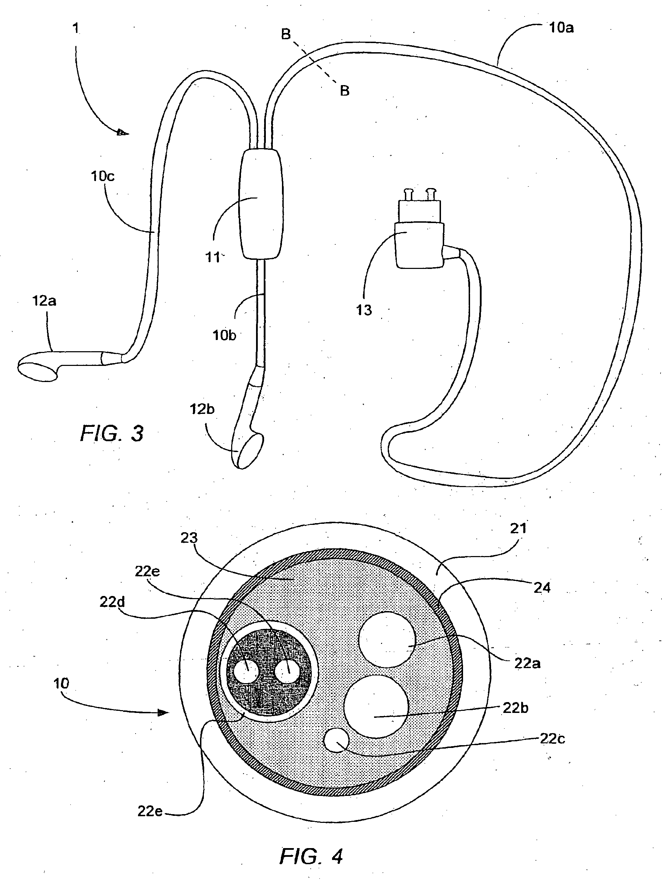

Fig. 3 and 4 illustrate two different views of a handsfree cable 1 in accordance with another embodiment of the invention. This example of the handsfree cable 1 is suitably, but not necessarily, intended for the usage together with a mobile phone. The handsfree cable 1 comprises an elongated body 10. The elongated body 10 may comprise an in-line microphone portion 11. As can be seen in Fig. 3, the handsfree cable 10 may further be branched-off at the microphone portion 11 into two separate body portions 10b, 10c. In the outer end of each of these portions 10b, 10c, there may be provided earpiece speakers 12a, 12b. Also, the handsfree cable 1 may be provided with a connector 13 for plugging into a jack of, e.g., the mobile phone. Fig. 4 is a cross-sectional view of the handsfree cable 1, for example, at B-B of Fig. 3. The interior 23 of the elongated body 10 of this handsfree cable 1 is similar to that described previously with respect to Figs. 1 and 2, but differs inter alia in that the shape memory alloy 24 is instead arranged as a tubular-shaped shape memory alloy positioned adjacent to the outer boundary layer 21 of the elongated body 10. The tubular-shaped memory alloy is in the form of a mesh-like tubular-shaped shape memory alloy. This embodiment has the same or similar effects and advantages as the embodiment as described with reference to Figs. 1 and 2 and, therefore, these will not explained in detail again.

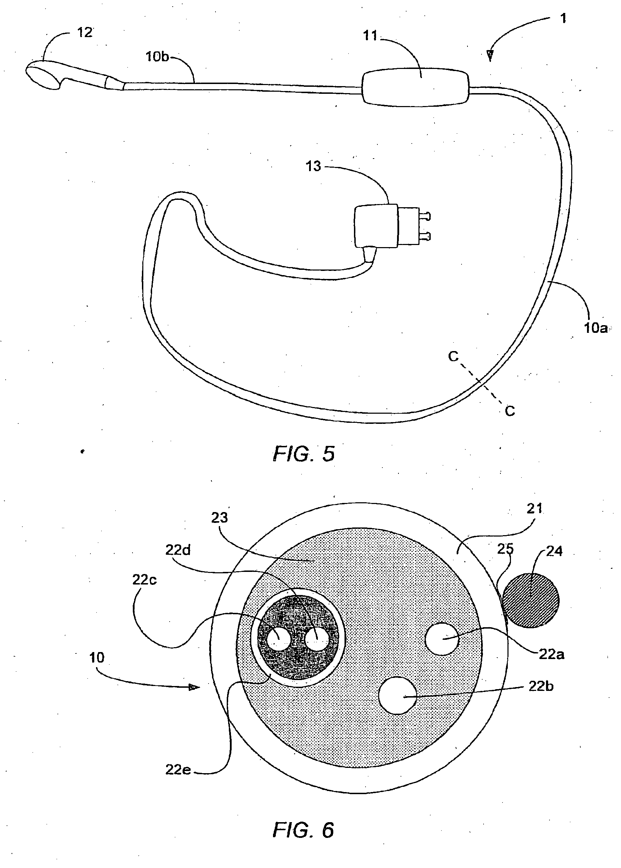

Fig. 5 and 6 illustrate two different views of a handsfree cable 1. This example of the handsfree cable 1 is suitably, but not necessarily, intended for the usage together with a mobile phone. The handsfree cable 1 comprises an elongated body 10. The elongated body 10 may comprise an in-line microphone portion 11. In one end of the handsfree cable 1, there may be provided an earpiece speaker 12. In the other opposite end, the handsfree cable 1 may be provided with a connector 13, e.g., for plugging into a jack of a mobile phone. Fig. 6 is a cross-sectional view of the handsfree cable 1, for example, at C-C of Fig. 5. The interior 23 of the elongated body 10 of this handsfree cable 1 is similar to that described previously with respect to Figs. 1 and 2. However, a difference between this embodiment and that of Figs. 1 and 2 is that the shape memory alloy 24 is arranged on an outer surface of the outer boundary layer 21 of the elongated body 10 as can be seen in Fig. 6. In this embodiment, the shape memory alloy is in the form of a shape memory alloy filament 24 attached to the outer surface of the outer boundary layer 21 of the elongated body 10. The shape memory alloy filament 24 may as a mere example be attached to the boundary layer 21 by means of an adhesive 25. Again, the shape memory alloy filament 24 may be a Ni-Ti filament, e.g. a Nitinol ® filament. Like in the previous embodiments described in conjunction with Figs 1 through 4, the shape memory alloy filament 24 in this embodiment also extends along the elongated body 10. The shape memory alloy filament 24 may extend along the elongated body 10 only in different sections of the elongated body 10 such that the elongated body 10 only comprises the shape memory alloy filament 24 stepwise along the length of the elongated body 10. However, it is advantageous to arrange the shape memory alloy filament 24 so that it extends along the full or substantially the full length of said elongated body 10 as was described in connection with the embodiment of Figs 1 and 2. The embodiment shown in Figs. 5 and 6 has substantially the same or similar effects and advantages as the previously described embodiments with reference to Figs. 1, 2, 3 and 4 and, therefore, these will not explained in detail here again.

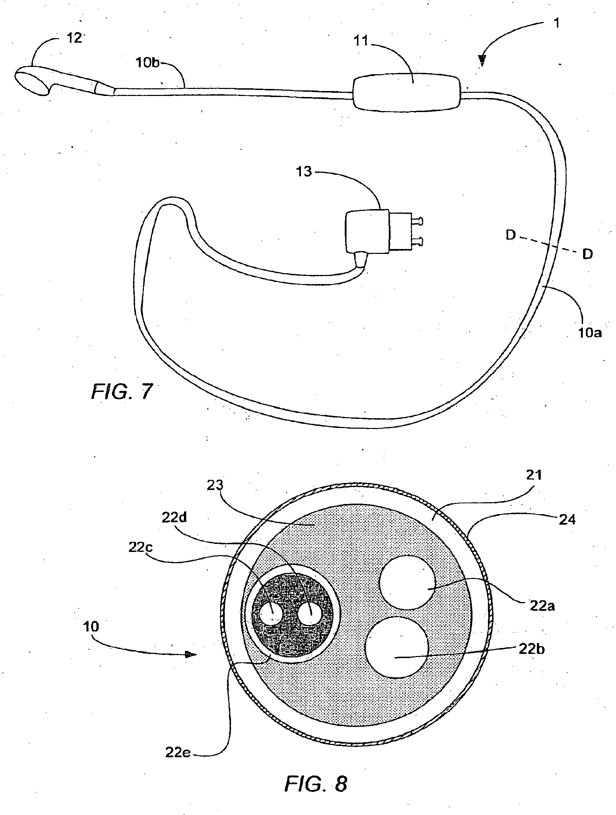

Figs. 7 and 8 illustrate two different views of a handsfree cable 1 in accordance with yet another embodiment of the present invention. Again, the handsfree cable 1 comprises an elongated body 10. The elongated body 10 may comprise an in-line microphone portion 11. In one end of the handsfree cable 1, there may be provided an earpiece speaker 12 and in the other opposite end, the handsfree cable 1 may be provided with a connector 13, e.g., for plugging into a jack of a mobile phone. Fig. 8 is a cross-sectional view of the handsfree cable 1, for example, at D-D of Fig. 7. This embodiment is similar to that described previously with respect to Figs. 5 and 6. However, in this embodiment the shape memory alloy 24 is instead arranged as a tubular-shaped shape memory, which is attached to the outer surface of the boundary layer 21 such that the outer surface of the boundary layer 21 is surrounded or covered by the tubular-shaped shape memory alloy as can be seen in Fig. 8. The tubular-shaped shape memory is a mesh-like tubular-shaped shape memory alloy. The tubular-shaped shape memory alloy may be attached to the outer surface of the boundary layer 21 by means of an adhesive. It is not necessary that the whole boundary layer 21 is surrounded or covered by the tubular-shaped shape memory alloy. In alternative embodiments, the outer surface of the boundary layer 21 is only partly covered by the shape memory alloy 24. For instance, a semi-tubular-shaped shape memory alloy may be attached to the outer surface of the boundary layer 21 such that only half of the circumference of the outer surface of boundary layer 21 is covered by such semi-tubular-shaped shape memory alloy. The embodiment shown in Figs. 7 and 8 has substantially the same or similar effects and advantages as the previously described embodiments disclosed with reference to Figs. 1 through 6 and, therefore, these will not explained in detail again.

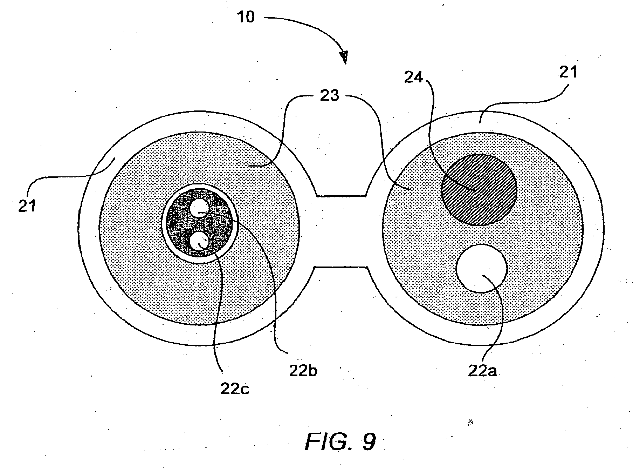

The various embodiments described above with reference to Figs. 1 to 8 have been described with reference to handsfree cables with elongated bodies having substantially circular-shaped cross-sections. However, it should be appreciated that other shapes of the cross-sections are equally possible within the scope of the present invention, such as rectangular-shaped cross-sections, polygon-shaped cross-sections, etc. As a mere example, Fig. 9 illustrates a cross-sectional view of an exemplary handsfree cable. Such a handsfree cable is sometimes referred to as a "twin cable".

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

The foregoing has described the principles, the preferred and disclosed embodiments and a mode of operation of the present invention. Some embodiments have been described in the detailed description in order to show one or several of the effects and advantages achieved by using a shape memory alloy, e.g. Nitinol®, as an integral part of a handsfree cable.

## Claims

1. A handsfree cable for use with a portable electronic device, the handsfree cable having an elongated body comprising an outer boundary layer which surrounds at least one wire, the handsfree cable being provided with an earpiece speaker in one end, wherein the handsfree cable comprises a shape memory alloy which extends along the full length of said elongated body, **characterized in that**
the shape memory alloy comprises a tubular-shaped shape memory alloy arranged at the outer boundary layer of the elongated body, wherein the tubular-shaped shape memory alloy is in the form of a mesh-like tubular-shaped shape memory alloy..

2. The handsfree cable as recited in claim 1, wherein the shape memory alloy is arranged inside the elongated body such that the shape memory alloy is surrounded by the outer boundary layer of the elongated body.

3. The handsfree cable as recited in any of claims 1-2, wherein the shape memory alloy is Nitinol ®.

4. The handsfree cable as recited in claim 1, wherein the shape memory alloy is arranged on an outer surface of the outer boundary layer of the elongated body.

5. The handsfree cable as recited in claim 4, wherein the shape memory alloy comprises a tubular-shaped shape memory alloy attached to said outer surface such that said outer surface is surrounded by the tubular-shaped shape memory alloy.

6. The handsfree cable as recited in claim 5, wherein the shape memory is attached to said outer surface by means of an adhesive.

7. The handsfree cable as recited in any of the claims 4-6, wherein the shape memory alloy is Nitinol®.

8. Use of a shape memory alloy as a constituent part of a handsfree cable for use with a portable electronic device, the handsfree cable having an elongated body comprising an outer boundary layer which surrounds at least one wire, the handsfree cable being provided with an earpiece speaker in one end, wherein the shape memory alloy extends along the full length of said elongated body, **characterized in that**
the shape memory alloy comprises a tubular-shaped shape memory alloy arranged at the outer boundary layer of the elongated body, wherein the tubular-shaped shape memory alloy is in the form of a mesh-like tubular-shaped shape memory alloy.

9. The use as recited in 8, wherein the shape memory alloy is Nitinol®.

## Patentansprüche

1. Freisprechkabel zur Verwendung mit einer tragbaren elektronischen Vorrichtung, wobei das Freisprechkabel einen länglichen Körper aufweist, welcher eine äußere Grenzschicht umfasst, welche wenigstens eine Leitung umgibt, wobei das Freisprechkabel mit einem Hörmuschellautsprecher an einem Ende versehen ist, wobei das Freisprechkabel eine Formgedächtnislegierung umfasst, welche sich entlang der ganzen Länge des länglichen Körpers erstreckt, **dadurch gekennzeichnet, dass**
die Formgedächtnislegierung eine röhrenförmige Formgedächtnislegierung umfasst, welche an der äußeren Grenzschicht des länglichen Körpers angeordnet ist, wobei die röhrenförmige Formgedächtnislegierung in der Form einer maschenartigen Formgedächtnislegierung vorliegt.

2. Freisprechkabel nach Anspruch 1, wobei die Formgedächtnislegierung in dem Inneren des länglichen Körpers so angeordnet ist, dass die Formgedächtnislegierung von der äußeren Grenzschicht des länglichen Körpers umgeben ist.

3. Freisprechkabel nach einem der Ansprüche 1-2, wobei die Formgedächtnislegierung Nitinol ® ist.

4. Freisprechkabel nach Anspruch 1, wobei die Formgedächtnislegierung auf einer Außenfläche der äußeren Grenzschicht des länglichen Körpers angeordnet ist.

5. Freisprechkabel nach Anspruch 4, wobei die Formgedächtnislegierung eine röhrenförmige Formgedächtnislegierung umfasst, welche an der Außenfläche angebracht ist, so dass die Außenfläche von der röhrenförmigen Formgedächtnislegierung umgeben ist.

6. Freisprechkabel nach Anspruch 5, wobei die Formgedächtnislegierung an die Außenfläche mittels eines Klebers angebracht ist.

7. Freisprechkabel nach einem der Ansprüche 4-6, wobei die Formgedächtnislegierung Nitinol ® ist.

8. Verwendung einer Formgedächtnislegierung als ein Bestandteil eines Freisprechkabels zur Verwendung mit einer tragbaren elektronischen Vorrichtung, wobei das Freisprechkabel einen länglichen Körper aufweist, welcher eine äußere Grenzschicht umfasst, welche wenigstens eine Leitung umgibt, wobei das Freisprechkabel mit einem Hörmuschellautsprecher an einem Ende versehen ist, wobei die Formgedächtnislegierung sich entlang der ganzen Länge des länglichen Körpers erstreckt, **dadurch gekennzeichnet, dass**
die Formgedächtnislegierung eine röhrenförmige Formgedächtnislegierung umfasst, welche an der äußeren Grenzschicht des länglichen Körpers angeordnet ist, wobei die röhrenförmige Formgedächtnislegierung in der Form einer maschenartigen Formgedächtnislegierung vorliegt.

9. Verwendung nach Anspruch 8, wobei die Formgedächtnislegierung Nitinol ® ist.

## Revendications

1. Câble mains libres destiné à être utilisé avec un dispositif électronique portable, le câble mains libres possédant un corps allongé comprenant une couche de délimitation extérieure qui entoure au moins un câble, le câble mains libres étant pourvu d'un haut-parleur en forme d'écouteur dans une extrémité, le câble mains libres comprenant un alliage à mémoire de forme qui s'étend le long de toute la longueur du dudit corps allongé, **caractérisé en ce que**
l'alliage à mémoire de forme comprend un alliage à mémoire de forme, de forme tubulaire, disposé au niveau de la couche de délimitation extérieure du corps allongé, l'alliage à mémoire de forme, de forme tubulaire, étant dans la forme d'un alliage à mémoire de forme, de forme tubulaire, possédant une forme de type maillage.

2. Câble mains libres selon la revendication 1, dans lequel l'alliage à mémoire de forme est disposé à l'intérieur du corps allongé, si bien que l'alliage à mémoire de forme est entouré par la couche de délimitation extérieure du corps allongé.

3. Câble mains libres selon l'une quelconque des revendications 1 à 2, dans lequel l'alliage à mémoire de forme est le Nitinol ®.

4. Câble mains libres selon la revendication 1, dans lequel l'alliage à mémoire de forme est disposé sur une surface extérieure de la couche de délimitation extérieure du corps allongé.

5. Câble mains libres selon la revendication 4, dans lequel l'alliage à mémoire de forme comprend un alliage à mémoire de forme, de forme tubulaire, fixé sur ladite surface extérieure, si bien que ladite surface extérieure est entourée par l'alliage à mémoire de forme, de forme tubulaire.

6. Câble mains libres selon la revendication 5, dans lequel l'alliage à mémoire de forme est fixé sur ladite surface extérieure à l'aide d'un adhésif.

7. Câble mains libres selon l'une quelconque des revendications 4 à 6, dans lequel l'alliage à mémoire de forme est le Nitinol ®.

8. Utilisation d'un alliage à mémoire de forme comme partie constituante d'un câble mains libres destiné à être utilisé avec un dispositif électronique portable, le câble mains libres possédant un corps allongé possédant une couche de délimitation extérieure qui entoure au moins un fil, le câble mains libres étant pourvu d'un haut-parleur en forme d'écouteur dans une extrémité, dans laquelle l'alliage à mémoire de forme s'étend le long de toute la longueur du dudit corps allongé, **caractérisée en ce que**
l'alliage à mémoire de forme comprend un alliage à mémoire de forme, de forme tubulaire, arrangé à la couche de délimitation extérieure du corps allongé, l'alliage à mémoire de forme, de forme tubulaire, étant dans la forme d'un alliage à mémoire de forme, de forme tubulaire, possédant une forme de type maillage.

9. Utilisation selon la revendication 8, dans laquelle l'alliage à mémoire de forme est le Nitinol ®.
